# EUROPEAN PATENT SPECIFICATION

(11) **EP 2 810 121 B1**
(45) Date of publication and mention of the grant of the patent: **23.10.2019**
(21) Application number: 13714725.2
(22) Date of filing: 01.02.2013
(51) Int. Cl.: G02B 27/09, F21S 8/00, G03B 21/20

(54) **AN IMPROVED LIGHT COLLIMATION SYSTEM**
VERBESSERTES LICHTKOLLIMATIONSSYSTEM
SYSTÈME DE COLLIMATION DE LUMIÈRE AMÉLIORÉ

(30) Priority: 01.02.2012 US 201261593310 P
(43) Date of publication of application: 10.12.2014
(73) Proprietor: Robe Lighting s.r.o., 756 61 Roznov pod Radhostem (CZ)
(72) Inventor: JURIK, Pavel, Prostredni Becva, 756 56 (CZ); VALCHAR, Josef, Prostredni Becva, 756 56 (CZ)
(74) Representative: Hanna Moore + Curley
(86) International application number: PCT/US2013/024441
(87) International publication number: WO 2013/116723

(56) References cited:
- EP-A2- 2 177 816
- US-A1- 2010 103 694
- US-A1- 2010 284 201

## Description

### TECHNICAL FIELD OF THE INVENTION

The present invention generally relates to an automated luminaire, specifically to a luminaire utilizing a high intensity light emitting diode (LED) light source. More specifically to a system and method for collimating the output of the light source.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. The beam pattern is often provided by a stencil or slide called a gobo which may be a steel, aluminum or etched glass pattern. The products manufactured by Robe Show Lighting such as the ColorSpot 700E are typical of the art.

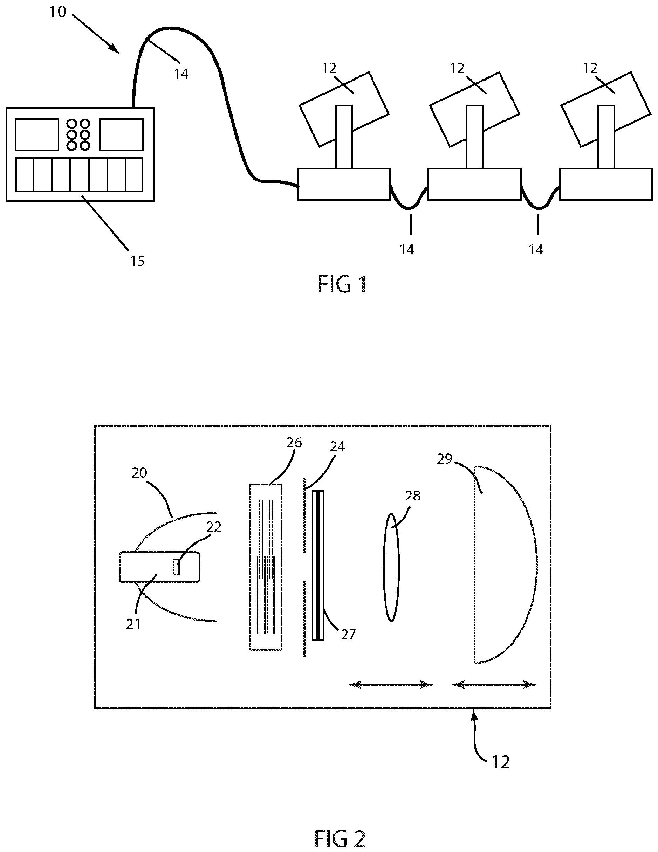

Figure 1 illustrates a typical multiparameter automated luminaire system 10. These systems commonly include a plurality of multiparameter automated luminaires 12 which typically each contain on-board a light source (not shown), light modulation devices, electric motors coupled to mechanical drive systems and control electronics (not shown). In addition to being connected to mains power either directly or through a power distribution system (not shown), each automated luminaire 12 is connected in series or in parallel via data link 14 to one or more control desks 15. The automated luminaire system 10 is typically controlled by an operator through the control desk 15. Consequently, to affect this control both the control desk 15 and the individual automated luminaires 12 typically include electronic circuitry as part of the electromechanical control system for controlling the automated lighting parameters.

Figure 2 illustrates a prior art automated luminaire 12 utilizing a high intensity discharge (HID) lamp. An HID lamp 21 contains an arc or plasma light source 22 which emits light. The emitted light is reflected and controlled by reflector 20 through an aperture or imaging gate 24. The resultant light beam may be further constrained, shaped, colored and filtered by optical devices 26 and/or 27 which may include dichroic color filters, dimming shutters, and other optical devices well known in the art. Some of these optical devices 26 may be located before the imaging gate 24 and some optical devices 27 may be located after the imaging gate 24. The final output beam may be transmitted through output lenses 28 and 29 which may form a zoom lens system.

Such prior art automated luminaires use a variety of technologies as the light sources for the optical system. For example it is well known to use incandescent lamps, high intensity discharge (HID) lamps, plasma lamps and LEOs as light sources in such a luminaire. Through the use of large reflectors, lenses or mirrors it is possible to collimate the light beam from such a product into a very narrow, almost parallel, light beam with a beam angle of less than 5°. More recently it has become increasingly desirable to replace the older technology HID and incandescent lamps with more efficient LED solid state light sources. However, the optical techniques used to collimate the prior art source which often have a small light source may not be readily applicable to an LED based light source, which typically comprise a larger source or even an array of sources. The etendue of such a source is large compared to the prior art, often emitting in a Lambertian manner over an entire hemisphere from the full area of the LED die. Current solutions to this collimation problem are often bulky and inefficient. There is thus a need for an improved efficiency collimating system, capable of collimating the light from an LED light source.

For example, EP 2 177 816 A2 discloses techniques for controlling the light output from an array of LEOs when used in a light beam producing luminaire. In particular, light from LED light sources is directed towards an entry port of a light integrator. The light integrator utilizes internal reflections so as to homogenize and constrain the light from the LED light sources. The homogenized light exits from the light integrator and may then be further controlled and directed by other optical elements.

### SUMMARY OF THE INVENTION

The invention is defined in independent claim 1. Particular embodiments are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIGURE 1 illustrates a typical multiparameter automated luminaire system;
FIGURE 2 illustrates a prior art automated luminaire;
FIGURE 3 illustrates an embodiment of an improved luminaire utilizing a high powered LED light source;
FIGURE 4 illustrates in greater detail the entry port and LED light source illustrated in Figure 3;
FIGURE 5 illustrates in greater detail the injection point of light from the light integrator into the light collimator illustrated in Figure 3;
FIGURE 6 illustrates the light collimator without the light integrator;
FIGURE 7 illustrates an alternative embodiment of the light collimator;
FIGURE 8 illustrates an alternative embodiment of the light collimator;
FIGURE 9 illustrates an embodiment of a light integrator for the embodiment illustrated in Figure 3;
FIGURE 10 illustrates an alternative embodiment of a light integrator for the embodiment illustrated in Figure 3;
FIGURE 11 illustrates a further embodiment of the luminaire;
FIGURE 12 illustrates an embodiment of a luminaire employing an array of collimators;
FIGURE 13 illustrates a side view of the embodiment illustrated in Figure 12; and
FIGURE 14 illustrates a side view of a further embodiment of the luminaire illustrated in Figure 12.

### DETAILED DESCRIPTION OF THE INVENTION

Preferred embodiments of the present invention are illustrated in the FIGUREs, like numerals being used to refer to like and corresponding parts of the various drawings.

The present invention generally relates to an automated luminaire, specifically to a luminaire utilizing a high intensity LED light source.

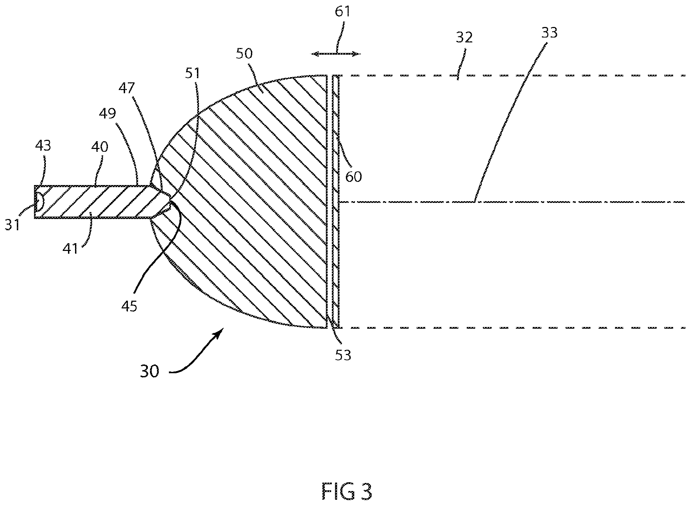

Figure 3 illustrates an embodiment of an improved luminaire 30 utilizing high powered LED light source 31. Each LED light source 31 may contain a single LED die or an array of LED(s). The illustration is a cross-sectional view along the center axis 33 of the luminaire's light beam 32. Such high-powered LEDs may be packaged as a single colored LED or they may be packaged as a tight array of LED dies. Such tight arrays of LED dies within a packaged LED light source 31 may be of a single color and type or may be of multiple colors such as a mix of Red, Green and Blue LED dies. Any number and mix of colors of LED dies may be used within each LED light source 31.

LED light source 31 is mounted so as to direct light towards the entry port 43 of light integrator 40. Light integrator 40 is a device utilizing internal reflection so as to homogenize and constrain the light from LED light source 31. Light integrator 40 may be a hollow tube with a reflective inner surface 41 such that light impinging into the entry port 43 may be reflected multiple times along the light integrator 40 before leaving at the exit port 45. As the light is reflected down the light integrator 40 in different directions from LED light source 31 the light beams will mix forming a composite beam where different colors of light are homogenized and an evenly colored even density beam is emitted from the exit port 45. Light integrator 40 may be a square tube, a hexagonal tube, a circular tube, an octagonal tube or a tube of other suitable cross-section.

In a preferred embodiment as illustrated in Figure 3, light integrator 40 is solid rod constructed of glass, transparent plastic or other optically transparent material where the reflection of the incident light beam within the rod is due to total internal reflection (TIR) from the interface between the material of the rod and the surrounding air. Such an integrating rod may be circular, polygonal, or irregular cross-sectional shape. In the embodiment illustrated in Figure 3 the exit port 45 of light integrator 40 is shown as tapering 47 from the main diameter 49. The invention is not so limited and any shape of exit port 45 of light integrator 40 is considered. In particular exit port 45 may be smaller than, the same size as, or larger than the light integrator 40. Additionally, the cross sectional shape of the exit port 45 may differ from the cross sectional shape of the main diameter 49 of the light integrator 40. However, in the preferred embodiment the size of the exit port 45 is smaller and the shape matches the shape of the cross sect-ion of the collimator 50.

The light integrator 40 injects the homogenized light through exit port 45 at an injection point 51 of the main collimator 50. In a preferred embodiment shown the main collimator 50 is solid, manufactured of glass, transparent plastic or other optically transparent material where the reflection of the incident light beam within the collimating optic is due to total internal reflection (TIR) from the interface between the material of the optic and the surrounding air. The optical collimator 50 reduces the beam angle of the light beam down from the high angle, such as one hundred and fifty degrees (150°), of the light emerging from the light integrator 40 down to a narrow angle output of perhaps five degrees (5°), the output surface 53 of the main collimator 50 should be significantly larger than the input from exit port 45 to efficiently achieve the very narrow angles desired from the system. For example in some embodiments the main collimator 50 has an output surface 53 that is 100mm- 150mm in diameter with integrator exit ports of 10mm-15mm or a ratio of 10:1. Those of reasonable skill in the art will appreciate that the exact measurements and ratios depend on the cross sectional shapes of the components and shapes of the exit ports selected in a particular embodiment and of course the specific package configuration of the LED source(s) employed.

Although in Figures 3 through 11 the main collimator 50 is shown with a circular cross section, the invention is not so limited and main collimator 50 may have many desired cross sectional shapes, such as hexagonal or other polygon, without restriction.

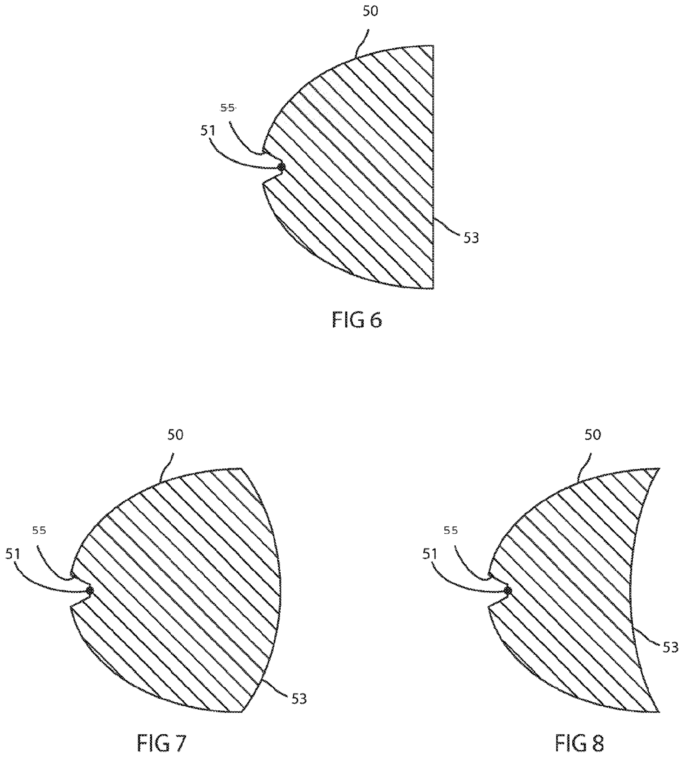

In the embodiment illustrated in Figure 3, Figure 6 and Figure 11, the output surface 53 is planar. In other embodiments the output surface 53 may be convex as found in Figure 7, concave as found in Figure 8, or may be covered with a diffusion or micro lens array.

The embodiment in Figure 3 also illustrates a secondary focusing optic, 60, which follows the main collimator 50, which is articulated to be moved along the center axis 33, as shown by arrow 61, in order to adjust the effective focal length of the luminaire 30, and thus alter the angle of the emerging light beam 32. In Figure 3 the system is illustrated as producing a near parallel light beam 32.

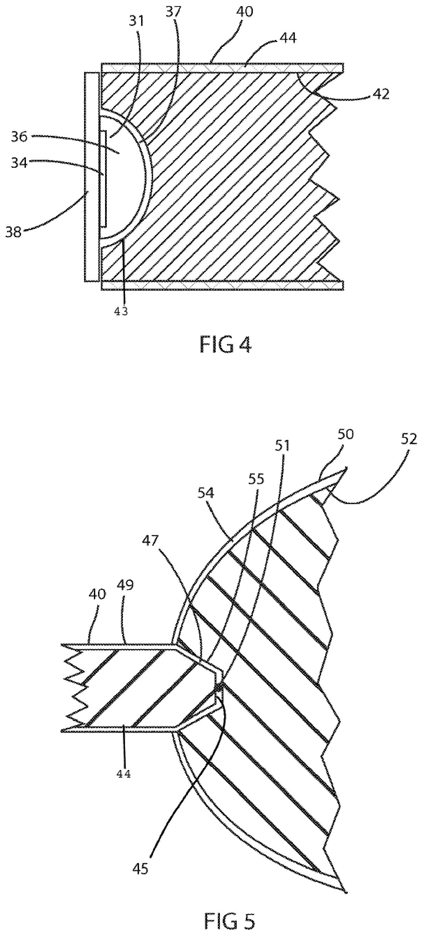

Figure 4 illustrates the entry port 43 and LED light source 31 in greater detail. A typical high-powered LED light source 31 comes packaged with the die 34 mounted on a circuit board 38 with primary optics 36. In other embodiments other LED sources with other packaging configurations may be employed. For example, the LED die may be a tight pack array of several dies or there may be no primary optics. Light source 31 may be a densely packed array of LEDs and may all be of a single color, such as white, or may be an array of different colors such as red, green, blue or red, green, blue and white or red, green, blue, amber and white or other color mixes as well known in the art.

For the purposes of the improved system, the significant issue is that the entry port 43 of the light integrator 40 be configured to optimize the receipt of light emitted from the LED light source 31. The embodiment illustrated in Figure 3 utilizes a solid light integrator 40 and the shape of the entry port 43 mirrors the shape of the LED light source 31 and packages primary optics 36. In the embodiment shown there is a small gap 37 between the LED light source 31 and the entry port 43 of the light integrator 40. In some embodiments this gap 37 may be filled with a light-transmitting adhesive which maximizes the transmission of light into a solid integrator 40 minimizing internal reflections with the added benefit of conducting heat away from the LED light source 31 into the light integrator 40.

In the embodiment illustrated the light integrator 40 is shown with a protective coating 44. This protective coating is designed to protect the TIR surface 42 of the integrator from scratches which would result in light leaks. In the preferred embodiment the protective coating 44 preferably is of a material of controlled refractive index applied in a manner that does not compromise the TIR of the light integrator 40.

In a hollow light integrator 40 embodiment, the entry port 43 is an opening and there is little advantage to a protective coating.

Figure 5 illustrates in greater detail the injection point 51 of light from the light integrator 40 into the light collimator 50. (The injection point 51 is a location. The dot in the illustration is just used to illustrate the location.) In the preferred embodiment this injection point 51 is a focal point of the inner TIR surface of the solid light collimator 50 of the embodiment shown. In the embodiment shown, the light collimator 50 also has a protective coating 54 like the protective coating 44 of the light integrator 40 discussed above to protect the TIR surface 52 of the light collimator 50. In the embodiment illustrated the protective coating 44 of the light integrator extends over the tapering 47 of the light integrator 40 stopping short of the exit port 45. In other embodiments the protective coating 44 stops short of the tapered section and short of entering into the receiving orifice 55 of the collimator 50, which receives the light integrator 40 to allow insertion of the light from the light integrator's exit port 45 at the injection point 51.

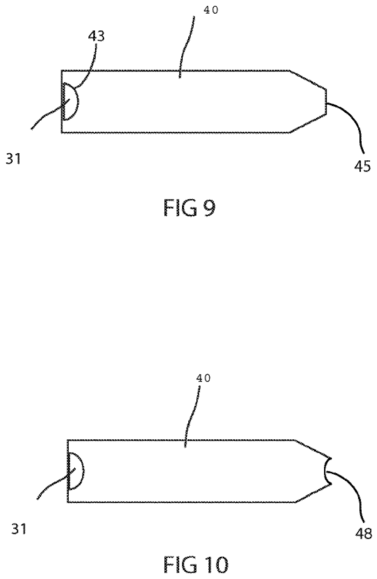

Figure 9 illustrates an embodiment of the light integrator 40 of the invention. LED light source 31 is mounted so as to direct light towards the entry port 43 of light integrator 40. Light integrator 40 is a device utilizing internal reflection so as to homogenize and constrain the light from LED light source 31. Light integrator 40 may be a hollow tube with a reflective inner surface, or may be a solid rod constructed of glass, transparent plastic or other optically transparent material where the reflection of the incident light beam within the rod is due to total internal reflection (TIR) from the interface between the material of the rod and the surrounding air. Such integrating rod may be circular, polygonal, or irregular cross-sectional shape. In the embodiment illustrated in Figure 9 the exit port 45 of light integrator 40 is a planar surface.

Figure 10 illustrates an alternative embodiment (in some cases preferred) of the light integrator 40. In this embodiment, the exit port 45 of light integrator 40 is a concave surface 48. This surface serves to distribute the light through a broader angle into the main collimator. The counter-intuitive effect is to emulate a very small point source through injecting the light at a broad angle at the injection point in the light collimator thus optimizing the efficiency in the collimator.

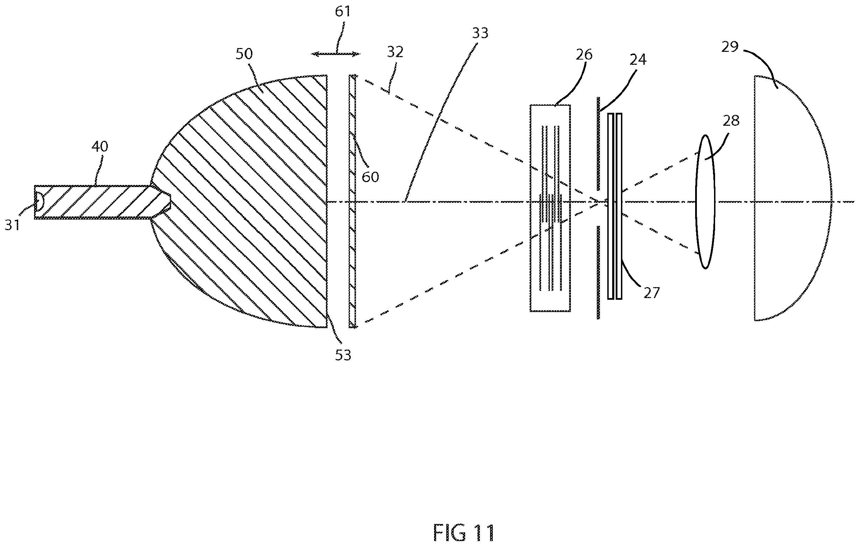

Figure 11 illustrates an embodiment of the invention where secondary focusing optic 60 has been moved, as shown by 61, along the center axis 33 such that the light beam 32 now converges on aperture 24. Such a beam may be used in an automated light system such as that shown in Figure 2 with optical devices such as 26, 27. The emergent homogenized light beam 32 may be directed through a series of such optical devices as well known within automated lights. Such devices may include, but not be restricted to, rotating gobos, static gobos, irises, color mixing systems utilizing subtractive color mixing flags, color wheels, framing shutters, frost and diffusion filters, and beam shapers. The final light beam may then pass through a series of objective lenses such as output lenses 28 and 29 which may provide variable beam angle or zoom functionality as well as the ability to focus on various components of the optical system before emerging as the required light beam.

Optical elements such as rotating gobos, static gobos, color mixing systems, color wheels and irises may be controlled and moved by motors. Such motors may be stepper motors, servo motors or other motors as known in the art.

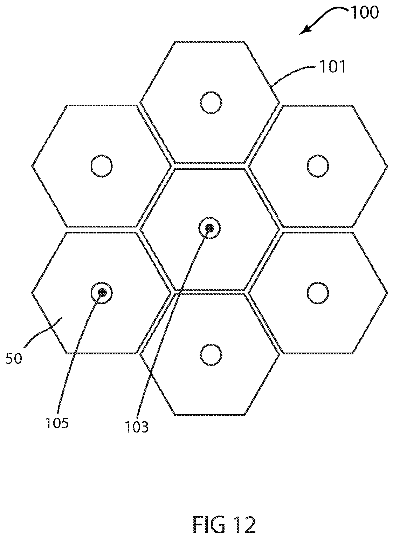

Figure 12 illustrates an embodiment of a luminaire 100 employing an array of collimators. Figure 12 is a view from the front on the luminaire looking back towards an array 101 of main collimators 50. In this embodiment the main collimators 50 are hexagonal in cross section such that they may be efficiently stacked together to produce a tightly packed array 101 of collimators 50. In further embodiments, square, circular, or other shapes of arrays of main collimators may also be used. Such arrays provide a means for producing higher light output. The light outputs from each collimator 50 of the array 101 of collimators 50 may have an optical axis 105 parallel to a central optical axis 103. In other embodiments they may be angled so as to have all of the individual optical axis 105 converge on a single point on a common optical axis such as the central optical axis 103. In other embodiments they may be oriented in some other manner to achieve a desired effect.

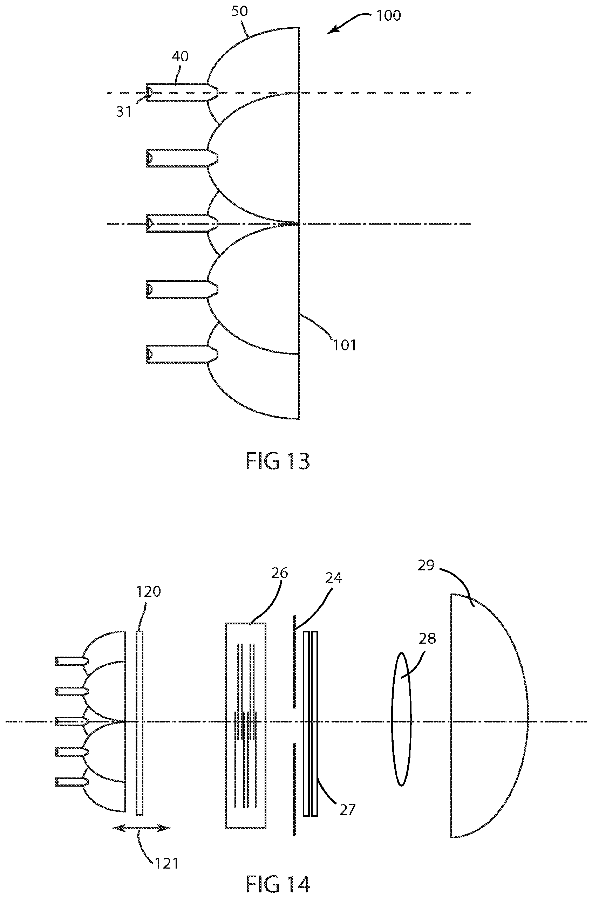

Figure 13 illustrates a side view of the embodiment illustrated in Figure 12 in an embodiment where the collimators 50 are configured so that each collimator's optical axis 105 is parallel to a central optical axis 103.

Figure 14 illustrates a side view of a further embodiment of the luminaire 100 illustrated in Figure 12, in which the collimator array 101 is used in any optical design of a luminaire which may be automated or conventional, including but not limited to, spot lights, wash lights and beam lights, employing aperture 24, optical devices 26 and 27, and output lenses 28 and 29 such as those in Figure 2. Such designs may use lenses such as Fresnel lenses or arrays of lenses. Automated luminaires using the invention may contain optical devices including but not limited to gobos, color mixing systems, rotating gobos, irises, prisms, beam shapers, variable frost, effects systems and moving reflectors to provide hot-spot control.

While the disclosure has been described with respect to a limited number of embodiments, those skilled in the art, having benefit of this disclosure, will appreciate that other embodiments may be devised which do not depart from the scope of the disclosure as defined by the appended claims. The disclosure has been described in detail, and it should be understood that various changes, substitutions and alterations can be made hereto without departing from the scope of the disclosure.

## Claims

1. A luminaire comprising:
a light source (31) packaged with primary optics (36); and
an elongated light integrator (40) adapted to collect light at an entry port (43), to integrate the light via a plurality of internal reflections, and to release the light at an injection point (51) which is positioned so the light is released in a collimator (50), the collimator (50) being adapted to collimate the light released from the injection point (51) into a narrow beam angle light beam (32);
wherein a shape of the entry port (43) mirrors the shape of the light source (31) package's primary optic; and
wherein a gap (37) between the light source (31) and the entry port (43) of the light integrator (40) is filled with a light-transmitting adhesive.

2. The luminaire of claim 1, wherein the light source (31) is an LED light source.

3. The luminaire of claim 1 or 2, wherein the light integrator (40) is tapered at the injection point (51).

4. The luminaire of claim 1, 2 or 3, wherein the light integrator (40) is narrowed near the injection point (51).

5. The luminaire of any of the preceding claims, wherein the light integrator (40) is solid and includes an exit port (45) shaped to widen the beam angle of the light released at the injection point (51).

6. The luminaire of claim 5, wherein the exit port (45) of the light integrator (40) has a concave surface (48).

7. The luminaire of any of the preceding claims, wherein the collimator (50) is solid.

8. The luminaire of any of the preceding claims, wherein the collimator (50) has a polygonal-shaped cross section.

9. The luminaire of claim 8, wherein the polygonal-shape is a hexagon.

10. The luminaire of any of the preceding claims, wherein a plurality of light sources (31) matched with a plurality of light integrators (40) and a plurality of similarly-shaped collimators (50, 101) nested together so that the light output from the collimators (50, 101) combines to form a combined light beam (32).

## Patentansprüche

1. Leuchte, umfassend:
eine Lichtquelle (31), die mit Primäroptiken (36) paketiert ist; und
einen länglichen Lichtintegrator (40), der dafür ausgelegt ist, Licht an einer Eintrittsöffnung (43) zu sammeln, das Licht über eine Mehrzahl von internen Reflexionen zu integrieren und das Licht an einem Einkopplungspunkt (51) freizusetzen, der solcherart positioniert ist, dass das Licht in einem Kollimator (50) freigesetzt wird, wobei der Kollimator (50) dafür ausgelegt ist, das von dem Einkopplungspunkt (51) freigesetzte Licht in einen Lichtstrahl (32) mit schmalem Strahlwinkel zu kollimieren;
wobei eine Form der Eintrittsöffnung (43) die Form der Primäroptik des Lichtquellen(31)-Pakets widerspiegelt; und
wobei ein Spalt (37) zwischen der Lichtquelle (31) und der Eintrittsöffnung (43) des Lichtintegrators (40) mit einem lichtübertragenden Klebstoff gefüllt ist.

2. Leuchte nach Anspruch 1, wobei die Lichtquelle (31) eine LED-Lichtquelle ist.

3. Leuchte nach Anspruch 1 oder 2, wobei der Lichtintegrator (40) an dem Einkopplungspunkt (51) verjüngt ist.

4. Leuchte nach Anspruch 1, 2 oder 3, wobei der Lichtintegrator (40) nahe dem Einkopplungspunkt (51) verengt ist.

5. Leuchte nach einem der vorhergehenden Ansprüche, wobei der Lichtintegrator (40) feststofflich ist und eine Austrittsöffnung (45) aufweist, die zum Weiten des Strahlwinkels des an dem Einkopplungspunkt (51) freigesetzten Lichts geformt ist.

6. Leuchte nach Anspruch 5, wobei die Austrittsöffnung (45) des Lichtintegrators (40) eine konkave Oberfläche (48) aufweist.

7. Leuchte nach einem der vorhergehenden Ansprüche, wobei der Kollimator (50) feststofflich ist.

8. Leuchte nach einem der vorhergehenden Ansprüche, wobei der Kollimator (50) einen polygonförmigen Querschnitt aufweist.

9. Leuchte nach Anspruch 8, wobei die Polygonform ein Hexagon ist.

10. Leuchte nach einem der vorhergehenden Ansprüche, wobei eine Mehrzahl von Lichtquellen (31), die mit einer Mehrzahl von Lichtintegratoren (40) abgestimmt ist, und eine Mehrzahl von ähnlich geformten Kollimatoren (50, 101) zusammengefügt sind, sodass die Lichtausgabe von den Kollimatoren (50, 101) kombiniert wird, um einen kombinierten Lichtstrahl (32) zu bilden.

## Revendications

1. Luminaire comprenant :
une source de lumière (31) en boîtier avec un élément optique principal (36) ; et
un intégrateur de lumière allongé (40) adapté pour collecter de la lumière à un orifice d'entrée (43), intégrer la lumière par l'intermédiaire d'une pluralité de réflexions internes, et libérer la lumière à un point d'injection (51) qui est positionné de telle sorte que la lumière est libérée dans un collimateur (50), le collimateur (50) étant adapté pour collimater la lumière libérée du point d'injection (51) en un faisceau lumineux à angle de faisceau étroit (32) ;
une forme de l'orifice d'entrée (43) reflétant la forme de l'élément optique du boîtier de source de lumière (31) ; et
un intervalle (37) entre la source de lumière (31) et l'orifice d'entrée (43) de l'intégrateur de lumière (40) étant rempli d'un adhésif transmettant la lumière.

2. Luminaire selon la revendication 1, dans lequel la source de lumière (31) est une source de lumière à DEL.

3. Luminaire selon la revendication 1 ou 2, dans lequel l'intégrateur de lumière (40) est effilé au point d'injection (51).

4. Luminaire selon la revendication 1, 2 ou 3, dans lequel l'intégrateur de lumière (40) est rétréci près du point d'injection (51).

5. Luminaire selon l'une quelconque des revendications précédentes, dans lequel l'intégrateur de lumière (40) est plein et comprend un orifice de sortie (45) formé pour élargir l'angle de faisceau de la lumière libérée au point d'injection (51).

6. Luminaire selon la revendication 5, dans lequel l'orifice de sortie (45) de l'intégrateur de lumière (40) a une surface concave (48).

7. Luminaire selon l'une quelconque des revendications précédentes, dans lequel le collimateur (50) est plein.

8. Luminaire selon l'une quelconque des revendications précédentes, dans lequel le collimateur (50) a une section transversale de forme polygonale.

9. Luminaire selon la revendication 8, dans lequel la forme polygonale est un hexagone.

10. Luminaire selon l'une quelconque des revendications précédentes, dans lequel une pluralité de sources de lumière (31) sont en correspondance avec une pluralité d'intégrateurs de lumière (40) et une pluralité de collimateurs de forme similaire (50, 101) sont imbriqués ensemble de telle sorte que la lumière sortant des collimateurs (50, 101) se combine pour former un faisceau lumineux combiné (32).
